# EUROPEAN PATENT SPECIFICATION

(11) **EP 2 008 227 B1**
(45) Date of publication and mention of the grant of the patent: **12.03.2014**
(21) Application number: 07735239.1
(22) Date of filing: 23.03.2007
(51) Int. Cl.: G06K 19/077

(54) **IMPROVED RFID TAG**
VERBESSERTES RFID-ETIKETT
ÉTIQUETTE RFID AMÉLIORÉE

(30) Priority: 10.04.2006 EP 06112410
(43) Date of publication of application: 31.12.2008
(73) Proprietor: NXP B.V., 5656 AG Eindhoven (NL)
(72) Inventor: SKORIC, Boris, A-1102 Vienna (AT); MAUBACH, Stefan, A-1102 Vienna (AT); SCHRIJEN, Geert, A-1102 Vienna (AT); TOMBEUR, Antoon, A-1102 Vienna (AT)
(74) Representative: Schouten, Marcus Maria
(86) International application number: PCT/IB2007/051028
(87) International publication number: WO 2007/116330

(56) References cited:
- WO-A-2006/025650
- WO-A2-2006/025650
- US-A1- 2005 012 616
- US-A1- 2005 012 616

## Description

### FIELD OF THE INVENTION

The present invention relates to radio frequency identification (RFID) tags.

### BACKGROUND OF THE INVENTION

RFID tags are typically small, often bendable, tags comprising a small integrated circuit and an antenna. The typical size of the circuit is about 1mm², while the antenna is typically much larger. RFID tags generally have no electric power of their own, in the form of a battery or similar power source, but respond to an externally generated electromagnetic field, generated by an RFID reader terminal. When an RFID tag is located in such an electromagnetic field, it gains electric power from it and, typically, receives messages from the reader terminal and gives responses with data to the reader terminal.

Needless to say, RFID tags are low-power devices, but they have gained more and more capabilities since their introduction some years ago. An RFID tag typically comprises a processing unit and is thereby able to do more or less advanced processing of data that is received and/or read from internal memory. An RFID tag may contain several types of memory, such as NV-RAM (non-volatile RAM), which operates only when electric power is present as well as ROM (read only memory) and EEPROM.

RFID tags are very widely used in a wide variety of application environments. Examples include animal identification tags, access keys to doors, suitcase handling at airports, supply chain management, inventory management, etc.

In particular, RFID tags are extremely useful at the supply chain/inventory/sales side, including such use as providing merchandise with information that enhances efficiency in virtually all parts of the supply chain, from the factory to the end user/customer.

Furthermore, it is now anticipated that RFID tags will be useful also when an article has been purchased by an end user/customer and found its way into the home of the user. For example, in the case of washable articles such as clothing, there now exist washing machines that can autonomously select a washing program based on information they receive from an RFID tag embedded in the clothing.

A description of a prior art RFID transponder for use in clothing can be found in the international patent application published as WO 2004/047013.

A drawback with prior art RFID tags is, however, that information from tags may get into the hands of unauthorized parties. That is, prior art tags do not provide necessary privacy protection when users/consumers carry readable RFID tags around in public places. For example, unauthorized and malicious parties can scan the tags and identify what items a person is carrying. This can be embarrassing, and it can effectively direct criminals to expensive articles of clothing or other portable goods. Furthermore, even if the information released by tags does not allow for identification of products, the information stored in the tag is typically time-independent. This gives malicious parties a very effective way of tracking a person.

US 2005/012616 A1 discloses an RFID device including a first, relatively permanent portion and a second alterable or inactivatable portion. Upon the occurrence of some predetermined event, the second portion and/or its coupling to the first portion is physically altered, inactivating it.

WO 2006/025650 A discloses a washing apparatus and washing method, which enables automatic sensing and providing properties of pieces of laundry introduced to the inside of the drum for a user to make reference in setting a program of the apparatus.

### OBJECT AND SUMMARY OF THE INVENTION

An object of the invention is to overcome drawbacks of prior art RFID systems as discussed above.

The object is achieved in different aspects by means of an RFID device as claimed in claim 1, and a washing machine as claimed, in claim 8.

Hence, in a first aspect the invention provides a radio frequency identification, RFID, device for use at an article to communicate information with a washing machine. The RFID device comprises RFID circuitry, an antenna connected to the RFID circuitry, as well as switching means connected to any of the RFID circuitry and the antenna and configured to react to contact with a fluid in the washing machine by switching the RFID circuitry from a first mode of operation to a second mode of operation. The two modes of operation comprise at least a respective first and second ability to communicate with the washing machine.

The RFID circuitry may in embodiments of the invention be configured such that the first mode of operation comprises that the RFID circuitry is unable to communicate information. For example, the switching means may be arranged such that they are connected between the antenna and the RFID circuitry.

In some embodiments, the switching means are configured to react to contact with the fluid such that the second mode of operation of the RFID circuitry is maintained only during the contact with the fluid.

Moreover, in some embodiments, the switching means are configured to react to contact with the fluid such that the second mode of operation of the RFID circuitry is maintained also after the contact with the fluid has been terminated.

Embodiments include those where the switching means comprise a fuse and a fluid sensitive switch. The fuse may be configured to react to a received signal, for example a relatively high power signal received from an RFID reader, by becoming non-conducting, thereby switching the RFID circuitry to enter the first mode of operation.

In a second aspect, the invention provides a washing machine comprising a control unit and an RFID reader configured to operate in connection with at least one RFID device as described above.

In other words, the invention provides an RFID tag that solves the privacy problem discussed above. For example, at a point of sale, the inventive RFID tag is "disabled", e.g. by burning a ROM component or wire connected to the RFID circuitry of the tag. As a result, the tag enters the first mode of operation in which communication with the tag is, if not made impossible, at least made difficult. The actual "disabling" can be done by transmission of a powerful electromagnetic signal from, e.g. an RFID reader or any other suitable transmitter.

In the "disabled" state, i.e. the first mode of operation, the tag is then functional only if enough conducting moisture is applied onto the tag. As stated above, this is made possible by way of the switching means that are configured to establish electric contact only when conducting liquid is present. As exemplified, the switching means may be located at a "strategic" location in connection with the RFID circuitry, such as between the antenna and the RFID circuitry.

Hence, a typical usage scenario is one in which the tag operates normally prior to sale, the tag is then effectively disabled before a user/customer brings the article on which the tag is present out of the point of sale. The tag remains non-communicating as long as it stays dry and is re-enabled again only when the article with the tag is put into a washing machine that pumps fluid (water, dry cleaning fluid etc.) onto the article.

A washing machine that is properly enabled to deal with RFID tags will typically first pump a small amount of cold water onto the clothes. Then it scans the tags for information regarding recommended temperatures, spin drying, color combinations, amounts of detergent etc. Based on this information it will choose a program that will not damage the products.

### BRIEF DESCRIPTION OF THE DRAWINGS

The invention will now be described in some more detail with reference to the drawings, where:
Figure 1 is a diagram schematically illustrating an RFID tag at a piece of clothing in a washing machine,
Figure 2 is a block diagram schematically illustrating an RFID tag according to one embodiment of the invention,
Figure 3 is a graph showing penetration depth with 10dB attenuation for RF signals in the frequency interval 10 MHz to 5 GHz,
Figure 4 shows and embodiment of an RFID tag according to the present invention,
Figure 5 shows a moisture sensor, and
Figure 6 shows an interface between the moisture sensor and the EPROM of the RFID chip.

### DESCRIPTION OF EMBODIMENTS

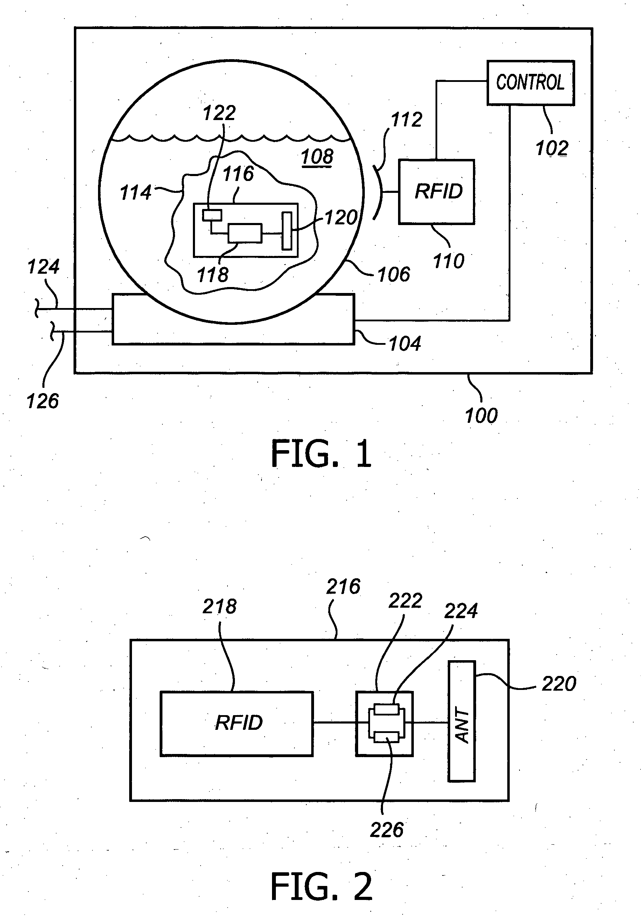

Figure 1 shows, schematically, a washing machine 100 comprising a washing fluid container 106, a control unit 102, an electromechanical interface unit 104 to which a washing fluid supply 124 and a washing fluid drain 126 are connected and an RFID reader 110 with an antenna 112.

A washable article 114 is immersed in washing fluid 108 in the container 106. An RFID tag 116 is attached to the washable article 114. The RFID tag 116 comprises RFID circuitry 118, connected to which are an antenna 120 and switching means 122. The switching means 122 are configured such that they have "disabled" the RFID circuitry, e.g. by burning a ROM component or wire connected to the RFID circuitry 118. As a result, the tag has entered a mode of operation in which communication with the tag 116 is, if not made impossible, at least made difficult. The actual "disabling" can be done by transmission of a powerful electromagnetic signal from, e.g., an RFID reader or any other suitable transmitter, prior to introduction of the washable article 114 with the tag 116 into the washing machine 100.

The control unit 102 is configured to control, via the electromechanical interface unit 104, washing cycles in terms of, e.g., inflow and outflow of the washing fluid 108, temperature of the washing fluid 108 as well as rotation of the container 106. In operation, the control unit 102 communicates with the RFID tag 116 and with any other tag attached to articles present in the container 106. The communication is performed by means of radio frequency, RF, signals via the RFID reader 110, the RFID reader antenna 112, the tag antenna 120 and the tag RFID circuitry 118. An effect of the tag 116 being immersed in the washing fluid 108 is that the switching means 122 become electrically conductive. The RFID circuitry 118 reacts to the electrically conductive switching means 122 by operating in a mode of operation where the communication, via the antennas 120 and the RFID reader 110, with the control unit 102 is enabled.

By reading information contained in the RFID circuitry 118, the control unit 102 is then capable of performing a washing cycle dictated by information communicated from the RFID circuitry 118 and any other RFID circuitry of tags present in the container 106.

An alternative configuration of an RFID tag 216 is schematically illustrated in figure 2. The tag 216 comprises RFID circuitry 218 connected to an antenna 220 via switching means 222. The switching means 222 are configured such that they are in one of two states. A first state in which the antenna 220 is disconnected from the RFID circuitry 218 and a second state in which the antenna 220 is connected to the RFID circuitry 218. The first state corresponds to the first mode of operation of the RFID circuitry 218 and the second state corresponds to the second mode of operation of the RFID circuitry 218, as discussed above. The switching means 222 may comprise a fuse 224 and a fluid sensitive switch 226.

The first state is obtained, for example as described above, by submitting the tag 216 and hence also the switching means 222 to a powerful electromagnetic signal from, e.g. an RFID reader or any other suitable transmitter, thereby effectively "burning away" a part of an electric lead in the fuse of the switching means 222. The second state is obtained, as already described, by subjecting the fluid sensitive switch of the switching means 222 to a conductive washing fluid, which effectively acts as a "replacement" electric lead for the "burnt away" lead in the fuse, connecting the antenna 220 with the RFID circuitry 218.

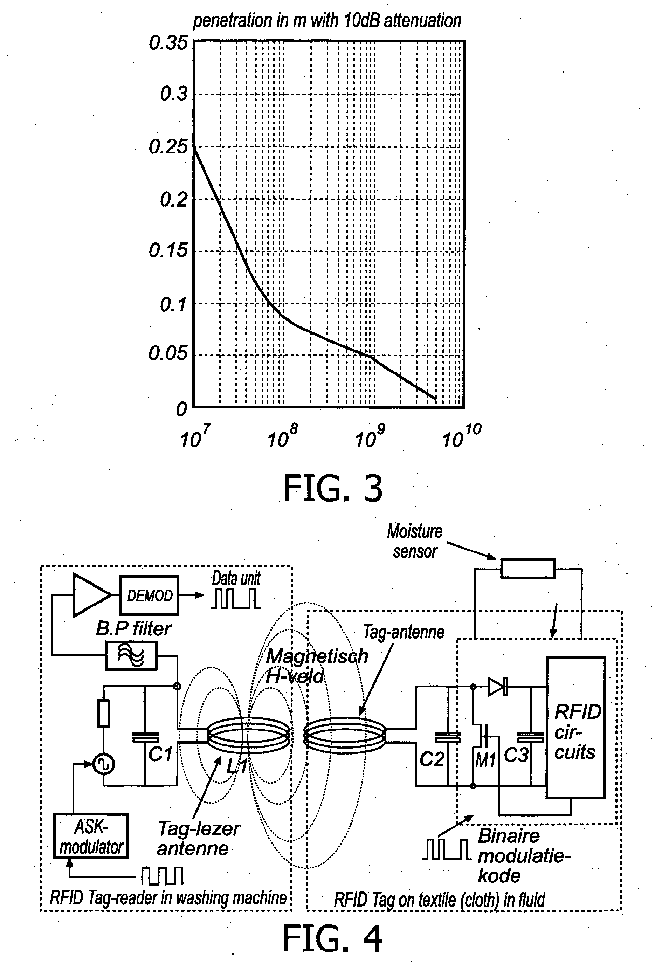

Although RF signals typically are attenuated when propagating through fluids such as water, this is not an obstacle that prevents operation of the invention as described. In fact, weakening of the RF signal used in the communication between the reader 110 and the tag 116 by 10dB is typically considered as acceptable. As seen in the graph of figure 3, at frequencies around 10MHz the RF signal penetrates 25cm into salty liquid, which is more than sufficient in a washing machine. The more salty the liquid, the smaller the penetration depth of the signal. Water is less salty than the liquid used for the illustration in figure 3.

Figure 4 shows another embodiment of an RFID tag according to the present invention.

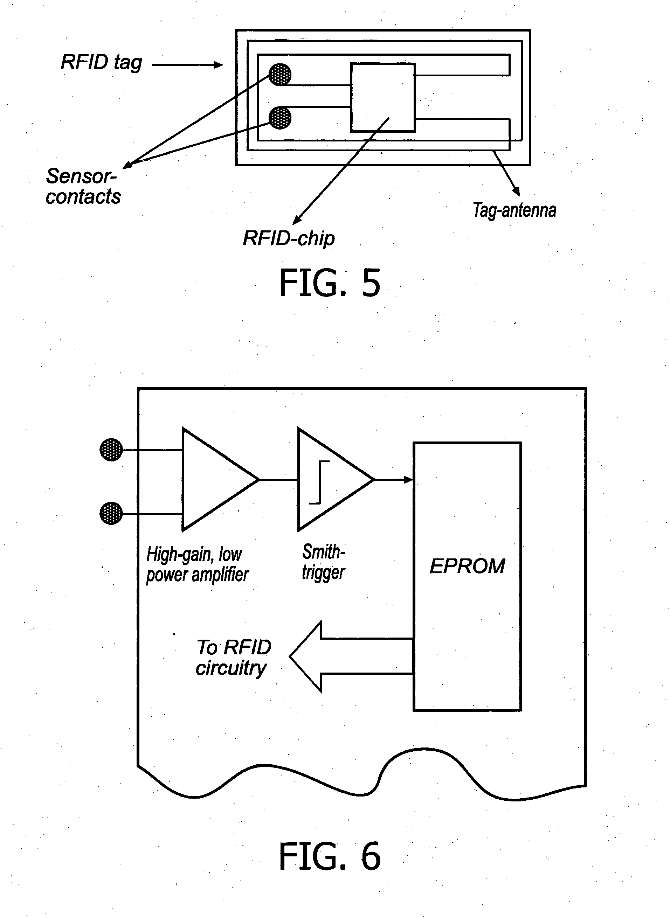

To re-activate the RFID-tag when exposed to a liquid, such as tap-water in a washing machine, the configuration shown in figure 4 could be applied. The Tag-reader can be a standard RFID-reader, built into the washing machine. The RFID tag , attached to the product (e.g. cloths, textile,..) is provided with a sensor (in its simplest form galvanic contacts). This sensor is electrically connected to the RFID-chip (see figure 5).

The RFID circuits of the RFID tag contain a non- vo latile, electrically programmable memory (EPROM). The content of this memory can be programmed by a code, transmitted by a tag-reader. The EPROM contains information to program the washing machine. But on top of that, a few bits of the EPROM are preserved to set the RFID circuits in a disable mode (e.g. sleep-mode) or enabled mode (active mode). When the product leaves the shop, the RFID reader in the shop will program the RFID tag into its sleep-mode. Once in the sleep mode, the tag cannot be activated anymore by any reader. Even when the tag is put into the washing machine, the dedicated tag-reader into the washing machine cannot reactivate the RFID, as long as the sensor (e.g. moisture depending resistor) is dry. From the moment that a certain amount of tap-water is put into the washing machine, and thus the sensor detects a minimum required amount of moisture, the tag-reader from figure 4 can program the EPROM of the tag, and set the RFID tag in its 'active' mode. From that moment, the contents of the tag's EPROM can be read out by the reader, and the washing machine can be programmed conform this data.

Figure 5 shows an example of an implementation of the moisture depending sensor. A simple "no-cost" moisture sensor can be constructed by means of two galvanic contacts, on the surface of the RFID tag. These contacts are connected to the circuits on board of RFID chip.

To interface this sensor to the RFID chip, this chip has to be provided with two additional bond pads (contacts). Moreover, these bond pads on the chip could act as sensor themselves. In that case no additional bond wires or other contacts are required on the tag. Furthermore, a low-power, high gain amplifier should be integrated on board of the chip. The output-signal of this (DC-) amplifier should be digitized by e.g. a smith-trigger circuit. The output of the smith-trigger will be a digital "0" or "1", representing "no moisture present" or "moisture present". On its turn, this digital signal will be programmed in the EPROM on board of the chip, and as a consequence, the chip can be activated (enabled). Obviously, this process can only take place when the tag is powered by the magnetic field of the tag-reader in the washing machine.

## Claims

1. radio frequency identification, RFID, device (116, 216) adapted for use at an article (114) and adapted for communication of information with a washing machine (100), comprising:
- RFID circuitry (118, 218),
- an antenna (120, 220) connected to the RFID circuitry (118, 218) and being for performing said communication by means of radio frequency signals, **characterized by** further comprising:
- switching means (122, 222) connected to any of the RFID circuitry (118, 218) and the antenna (120, 220) and configured to react to contact with a fluid (108), by switching the RFID circuitry (118, 218) from a first mode of operation in which said communication is disabled to a second mode of operation in which said communication is enabled.

2. The device of claim 1, where the switching means (122, 222) are connected between the antenna (120, 220) and the RFID circuitry (118, 218).

3. The device of claim 1 or 2, where the switching means (122, 222) are configured to react to contact with the fluid (108) such that said second mode of operation of the RFID circuitry (118, 218) is maintained only during said contact with the fluid (108).

4. The device of any of claims 1 or 2, where the switching means (122, 222) are configured to react to contact with the fluid (108) such that said second mode of operation of the RFID circuitry (118, 218) is maintained during said contact with the fluid and after said contact with the fluid (108) has been terminated.

5. The device of any of claims 1 to 4, where said switching means (122, 222) comprise a fuse (224) and a fluid sensitive switch (226).

6. The device of claim 5, wherein the fuse (224) is configured to react to a received signal by becoming non-conducting, thereby switching the RFID circuitry (118, 218) to enter said first mode of operation.

7. The device of claim 6, where the fuse (224) is configured to be destroyed by a power signal received from an RFID reader (110).

8. A washing machine (100) comprising a control unit (102) and an RFID reader (110) configured to operate in connection with at least one RFID device (116, 216) according to any of claims 1 to 7 attached to a washable article, **characterized in that** the washing machine is adapted to pump a small amount of water on said washable article to facilitate switching the RFID device from the first mode of operation to the second mode of operation prior to scanning the RFID device for washing cycle information.

## Patentansprüche

1. Eine Radiofrequenz Identifikations-, RFID, Vorrichtung (116, 216), welche eingerichtet ist zum Verwenden an einem Gegenstand (114) und eingerichtet für eine Kommunikation von Information mit einer Waschmaschine (100), aufweisend:
RFID Schaltung (118, 218),
eine Antenne (120, 220), welche mit der RFID Schaltung (118, 218) verbunden ist und zum Ausführen der Kommunikation, mittels eines Mittels von Radiofrequenz Signalen ist, **dadurch gekennzeichnet, dass** die Vorrichtung ferner aufweist:
Schaltmittel (122, 222), welche mit irgendeiner der RFID Schaltungen (118, 218) und der Antenne (120, 220) verbunden sind und konfiguriert sind, um auf Kontakt mit einem Fluid (108) zu reagieren, mittels Schalten der RFID Schaltung (118, 218) von einem ersten Betriebsmodus, in welchem die Kommunikation deaktiviert ist, zu einem zweiten Betriebsmodus, in welchem die Kommunikation aktiviert ist.

2. Die Vorrichtung gemäß Anspruch 1, wo die Schaltmittel (122, 222) zwischen der Antenne (120, 220) und der RFID Schaltung (118, 218) verbunden sind.

3. Die Vorrichtung gemäß Anspruch 1 oder 2, wo die Schaltmittel (122, 222) konfiguriert sind, um auf Kontakt mit dem Fluid (108) zu reagieren, so dass der zweite Betriebsmodus der RFID Schaltung (118, 218) nur während dem Kontakt mit dem Fluid (108) aufrechterhalten wird.

4. Die Vorrichtung gemäß den Ansprüchen 1 oder 2, wo die Schaltmittel (122, 222) konfiguriert sind, um auf Kontakt mit dem Fluid (108) zu reagieren, so dass der zweite Betriebsmodus der RFID Schaltung (118, 218) während dem Kontakt mit dem Fluid (108) und nachdem der Kontakt mit dem Fluid (108) beendet wurde aufrechterhalten wird.

5. Die Vorrichtung gemäß irgendeinem der Ansprüche 1 bis 4, wo die Schaltmittel (122, 222) eine Sicherung (224) und einen fluidsensitiven Schalter (226) aufweisen.

6. Die Vorrichtung gemäß Anspruch 5, wobei die Sicherung (224) konfiguriert ist, um auf ein empfangenes Signal zu reagieren, indem sie nicht-leitend wird, dabei schaltet sie die RFID Schaltung (118, 218), um in den ersten Betriebsmodus einzutreten.

7. Die Vorrichtung gemäß Anspruch 6, wo die Sicherung (224) konfiguriert ist, um mittels eines Energiesignals zerstört zu werden, welches von einem RFID Leser (110) empfangen wird.

8. Eine Waschmaschine (100) aufweisend eine Steuereinheit (102) und einen RFID Leser (110), welcher konfiguriert ist, um in Verbindung mit zumindest einer RFID Vorrichtung (116, 216) gemäß irgendeinem der Ansprüche 1 bis 7 betrieben zu werden, welche an einem waschbaren Gegenstand befestigt ist, **dadurch gekennzeichnet, dass**
die Waschmaschine eingerichtet ist, um eine kleine Menge Wasser auf den waschbaren Gegenstand zu pumpen, um das Schalten der RFID Vorrichtung von dem ersten Betriebsmodus zu dem zweiten Betriebsmodus zu erleichtern, bevor die RFID Vorrichtung nach Waschzyklus-Information gescannt wird.

## Revendications

1. Dispositif d'identification par radiofréquence, RFID, (116, 216) conçu pour être utilisé sur un article (114) et conçu pour communiquer des informations à un lave-linge (100), comprenant :
un circuit RFID (118, 218),
une antenne (120, 220) connectée au circuit RFID (118, 218) et servant à établir ladite communication au moyen de signaux radiofréquence, **caractérisé en ce qu'**il comprend en outre :
des moyens de commutation (122, 222) connectés au circuit RFID (118, 218) ou à l'antenne (120, 220) et configurés pour réagir au contact d'un fluide (108) en commutant le circuit RFID (118, 218) d'un premier mode de fonctionnement, dans lequel ladite communication est désactivée, à un second mode de fonctionnement, dans lequel ladite communication est activée.

2. Dispositif selon la revendication 1, dans lequel les moyens de commutation (122, 222) sont connectés entre l'antenne (120, 220) et le circuit RFID (118, 218).

3. Dispositif selon la revendication 1 ou la revendication 2, dans lequel les moyens de commutation (122, 222) sont configurés pour réagir au contact avec le fluide (108) de manière à ce que ledit second mode de fonctionnement du circuit RFID (118, 218) soit maintenu uniquement au cours dudit contact avec le fluide (108).

4. Dispositif selon l'une quelconque des revendications 1 ou 2, dans lequel les moyens de commutation (122, 222) sont configurés pour réagir au contact avec le fluide (108) de manière à ce que ledit second mode de fonctionnement du circuit RFID (118, 218) soit maintenu au cours dudit contact avec le fluide et une fois que ledit contact avec le fluide (108) n'est plus établi.

5. Dispositif selon l'une quelconque des revendications 1 à 4, dans lequel lesdits moyens de commutation (122, 222) comprennent un fusible (224) et un commutateur sensible au fluide (226).

6. Dispositif selon la revendication 5, dans lequel le fusible (224) est configuré pour réagir à un signal reçu en devenant non conducteur, commutant ainsi le circuit RFID (118, 218) pour qu'il passe dans ledit premier mode de fonctionnement.

7. Dispositif selon la revendication 6, dans lequel le fusible (224) est configuré pour être détruit par un signal de puissance reçu d'un lecteur RFID (110).

8. Lave-linge (100) comprenant une unité de commande (102) et un lecteur RFID (110) configuré pour fonctionner en lien avec au moins un dispositif RFID (116, 216), selon l'une quelconque des revendications 1 à 7, lié à un article lavable, **caractérisé en ce que** le lave-linge est conçu pour pomper une petite quantité d'eau sur ledit article lavable pour faciliter la commutation du dispositif RFID du premier mode de fonctionnement au second mode de fonctionnement avant de scanner le dispositif RFID pour obtenir des informations de cycle de lavage.
